# EUROPEAN PATENT SPECIFICATION

(11) **EP 2 562 075 B1**
(45) Date of publication and mention of the grant of the patent: **07.05.2014**
(21) Application number: 11178734.7
(22) Date of filing: 24.08.2011
(51) Int. Cl.: B63B 1/38

(54) **Rudder resistance reducing method**
Verfahren zur Verringerung des Ruderwiderstands
Procédé de réduction de la résistance de gouvernail

(43) Date of publication of application: 27.02.2013
(73) Proprietor: Lin, Zuei-Ling, Taipei City 10567 (TW)
(72) Inventor: Lin, Zuei-Ling, Taipei City 10567 (TW)
(74) Representative: Chaillot, Geneviève

(56) References cited:
- WO-A1-96/35607
- US-A1- 2002 014 192
- US-B1- 6 575 106

## Description

### BACKGROUND OF THE INVENTION

### 1. Field of the Invention:

The present invention relates to heat sink technology and more particularly, to rudder performance technology and more particularly, to a rudder resistance reducing method, which utilizes a negative pressure to guide in gas for generating air bubbles, reducing the resistance of the rudder of a boat.

### 2. Description of the Related Art:

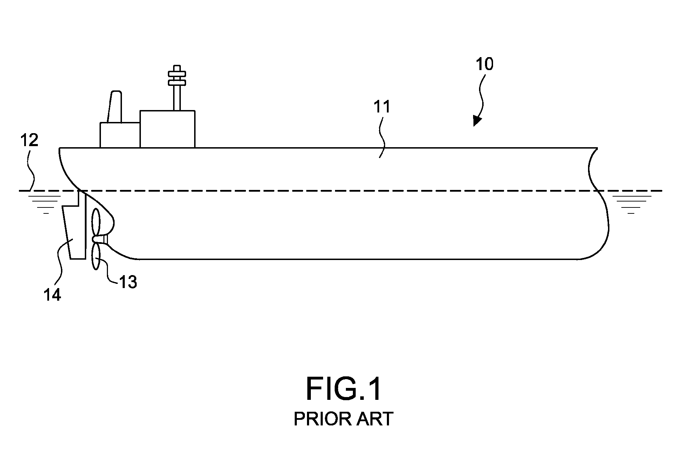

A boat, except the boat body, has attachments and gears hung on the outside of the boat body. For example, a boat **10** shown in FIG. 1 comprises a boat body **11,** a propeller **13** pivotally connected to the boat body **11** below the water line **12,** and an attachment, for example, a rudder **14** arranged at the boat **10** at a rear side relative to the propeller **13** for controlling the steering direction of the boat.

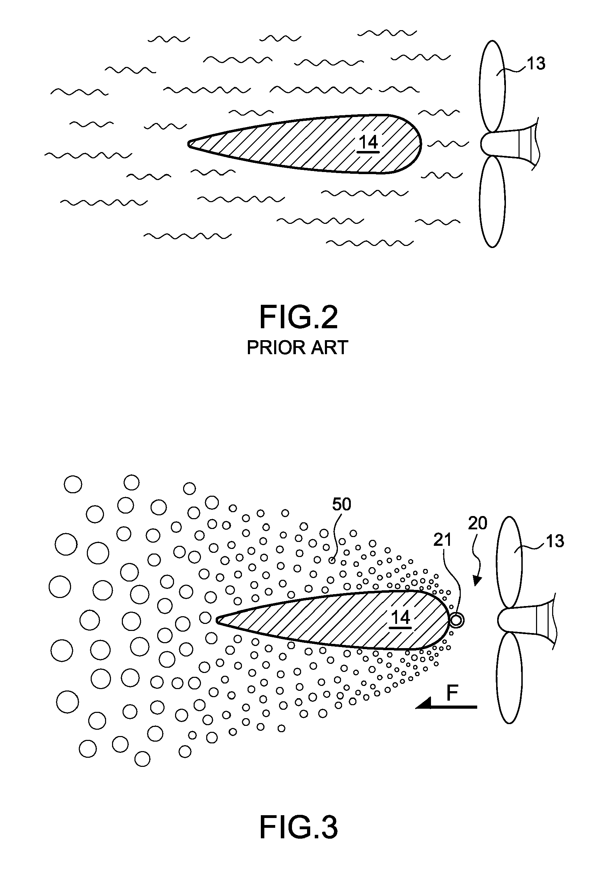

Referring to FIG. 2, during rotation of the propeller **13** of the aforesaid boat **10,** a flow of water is produced that passes through the rudder **14.** As the rudder **14** is disposed at the downstream of the flow of water caused by the propeller **13,** a resistance will be produced against the steering direction of the board. Further, because the rudder **14** is a requisite attachment of the boat **10,** resistance will be inevitably produced against the rudder **14** during rotation of the propeller **13** to cause a high-speed flow of water.

Conventional methods for reducing the aforesaid resistance are commonly to modify the streamline design of the rudder or surface treatment without affecting the structural strength of the rudder. However, these methods cannot achieve a significant effect in reducing the rudder resistance.

Therefore, it is desirable to provide a measure for reducing rudder resistance in an economic manner, minimizing fuel gas consumption.

US Patent No. 2002/0014192 discloses a method of reducing frictional resistance and friction reducing ship to a bulk ship such as a tanker or container ship wherein a friction reducing ship comprises a ship body, a bubble generation apparatus, an outer hull plate, a screw, a rudder, and a water surface.

WO Patent No. 96/35607 discloses a rudder of a boat comprising a plurality of duct outlets which are covered by flaps arranged on each side of rudder wherein flaps lie on sides and are fixed to rudder at leading end regions of the flaps, and curved portions of rudder direct the flow of air along opposite sides of the rudder when the flap is in the open position. That is, when the speed of the boat increases, the flaps are drawn open by the movement of the water over the flaps in combination with the flow of air out through duct outlets from a duct, thereby decreasing turbulence to rear of the rudder. That is, the flaps is provided to inhibit the formation of turbulence at rear peripheral regions of duct outlets and so avoid an increase in drag acting on the rudder caused by the presence of the duct outlets.

### SUMMARY OF THE INVENTION

The present invention has been accomplished under the circumstances in view. It is the main object of the present invention to provide a rudder resistance reducing method, which uses an air bubble generator in front of the rudder for generating bubbles during rotation of the propeller of the boat to cause a high-speed flow of water without changing the original design of the boat, enabling the air bubbles to isolate contact between the high-speed flow of water and the rudder, thereby reducing rudder resistance and saving energy consumption.

To achieve the main object, a rudder resistance reducing method comprises the steps of:
a) providing a boat comprising a propeller rotatable to drive the boat to steer and a rudder installed in the boat body at a rear side relative to the propeller;
b) installing an air bubble generator in the boat at a front side relative to the rudder, the air bubble generator comprising an air tube arranged at the water face of the rudder and defining at least one gas inlet and opposing pairs of gas release outlets;
c) providing a gas guide device comprising at least one guide pipe, the at least one guide pipe having a bottom end thereof connected to the at least one gas inlet of the air tube and a top end thereof terminating in an intake hole;
d) employing rotation of the propeller and steering of the boat body to cause a high-speed flow of water, due to Bernoulli's principle, said high-speed flow of water enables pressure in the gas release outlets rapidly decreased to form a negative pressure for sucking in outside air for generating air bubbles during rotation of the propeller;
e) employing said negative pressure to suck in outside air which is to be guided by said at least one guide pipe into said at least one gas inlet of said air tube and then discharged out of said gas release outlets to mix with water and to produce multiple air bubbles; and
f) utilizing the air bubbles thus produced to isolate a part of the high-speed flow of water and the rudder and to reduce friction contact between the high-speed flow of water and the rudder and to further reduce the resistance of the rudder against the high-speed flow of water.

Further, a gas guide device is used for guiding air or gas into the air bubble generator. The gas guide device uses a supplementary measure to guide engine waste gas or low pressure gas from the steam turbine into the gas guide device for generating air bubbles.

Further, the gas guide device further compresses a pressure device for pumping a gas into the gas guide device. The pressure device can be selected from an air compressor, an air blower, an engine, a steam turbine and a turbo of the boat.

### BRIEF DESCRIPTION OF THE DRAWINGS

FIG. 1 is a schematic drawing illustrating an arrangement of a rudder in a conventional boat.
FIG. 2 is a schematic drawing illustrating a flow of water caused and passed over the rudder during rotation of the propeller according to the prior art.
FIG. 3 is a schematic drawing illustrating air bubbles generated in the flow of water caused and passed over the rudder during rotation of the propeller in accordance with the present invention.
FIG. 4 is a schematic drawing illustrating the arrangement of the gas guide device in the boat in accordance with the present invention.
FIG. 5 is a sectional view taken in an enlarged scale along line 5-5 of FIG. 4.
FIG. 6 is an enlarged view of the major part which is No. 6 of FIG. 5, illustrating generation of air bubbles in the negative pressure.
FIG. 7 is an exploded elevational view of the air bubble generator shown in FIG. 6.

### DETAILED DESCRIPTION OF THE PREFERRED EMBODIMENT

Further features and benefits of the present invention will be apparent from the following detailed description of the preferred embodiment taken in conjunction with the annexed drawings. However, it is to be understood that the invention is applicable to any of a variety of boats. The present preferred embodiment is simply an example but not a limitation.

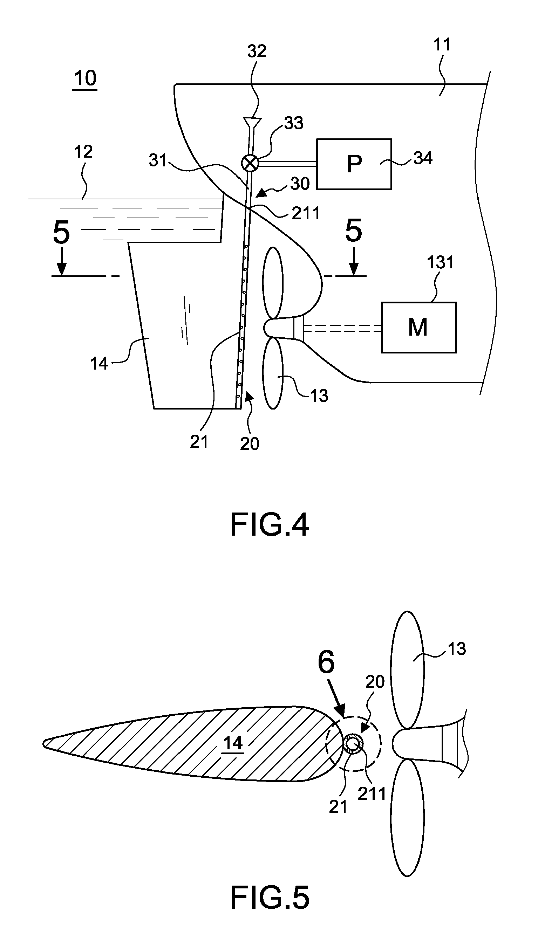

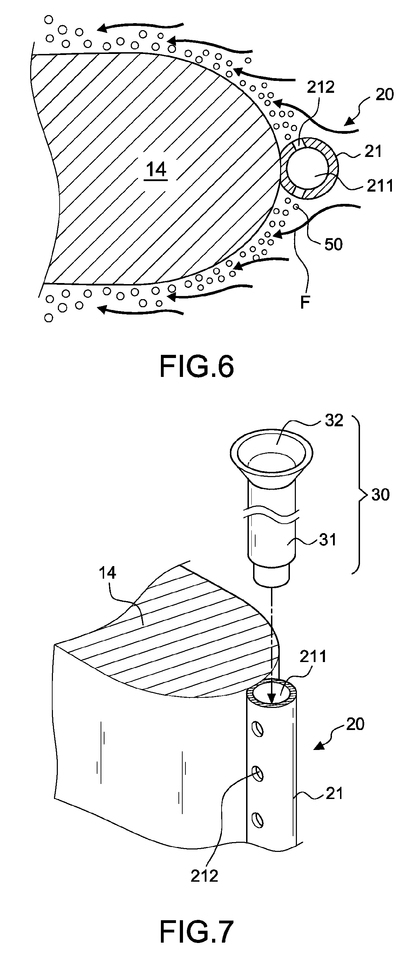

Referring to FIGS. 3 to 6, when compared to the surface resistance of the rudder **14** of the prior art design shown in FIG. 2, multiple air bubbles **50,** as shown in FIG. 3, are generated in the flow of water that is produced during steering of the board to reduce rudder resistance. The rudder resistance reducing method in accordance with the preferred embodiment of the present invention, as shown in FIGS. 4 and 5, comprises the steps of:
a) providing a boat **10** comprising a boat body **11,** a propeller **13** pivotally mounted in the boat body **11,** a power engine **131** for rotating the propeller **13** to cause a high-speed flow of water **F,** and a rudder **14** installed in the boat body **11** at a rear side relative to the propeller **13;**
b) installing an air bubble generator **20** in the boat body **11** at a front side relative to the rudder **14,** wherein the air bubble generator **20,** as shown in FIGS. 6 and 7, comprises an air tube **21**, which is, circular tube arranged at the water face of the rudder **14** and defines at least one gas inlet **211** and opposing pairs of gas release outlets **212** in, for example, circular shape; the air tube **21** can be formed integral with the rudder **14** and processed to provide the gas release outlets **212** during fabrication of the boat **10,** or alternatively, the air tube **21** can be separately made and then affixed to the water face of the rudder **14** without destructing the structural strength of the rudder **14;**
c) providing a gas guide device **30,** which, as shown in FIG. 4, comprises at least one guide pipe **31** that has its bottom end connected to the at least one gas inlet **211** of the air tube **21** and its top end terminating in an intake hole **32** that is disposed in the boat body **11** or above the water line **12;**
d) employing rotation of the propeller **13** and steering of the boat body **11** to cause a high-speed flow of water **F** that strikes the water face of the rudder **14;** due to Bernoulli's principle, the aforesaid high-speed flow of water **F** enables pressure in the gas release outlets **212** rapidly decreased to form a negative pressure for sucking in outside air for generating air bubbles **50** without power consumption;
e) employing said negative pressure to suck in outside air which is to be guided by said at least one guide pipe **31** into said at least one gas inlet **211** of said air tube **21** and then discharged out of said gas release outlets **212** to mix with water and to produce multiple air bubbles **50;** and
f) utilizing the air bubbles **50** thus produced, as shown in FIG. 3, to isolate a part of the high-speed flow of water **F** and the rudder **14** and to reduce friction contact between the high-speed flow of water **F** and the rudder **14** and to further reduce the resistance of the rudder **14** against the high-speed flow of water that is produced during rotation of the propeller **13.**

As the resistance of water is about 700 to 800 times greater than air, using the air bubbles **50** to reduce contact between the high-speed flow of water **F** and the rudder **14** can effectively reduce the resistance, the more the isolation of the contact between the high-speed flow of water **F** and the rudder **14** the better the resistance reducing effect will be.

Based on the aforesaid technical measure for generating air bubbles **50,** the invention simply needs to install an air bubble generator **20** in front of the rudder **14** without using any power drive or changing the original design of the boat.

Referring to FIG. 4, the existing resources of the boat body **11** may be utilized for pumping air or gas into the at least one guide pipe **31** of the gas guide device **30,** for example, a pressure device **34** may be connected to the at least one guide pipe **31** of the gas guide device **30** and a control valve **33** may be set between the at least one guide pipe **31** and the pressure device **34.** The pressure device **34** is adapted for pumping air, engine waste gas or waste gas from the steam turbine in the boat body **11** into the at least one guide pipe **31.**

Further, the pressure device **34** can be the existing air compressor, air blower, engine or steam turbine in the boat body **11.** The resource recycling of directly guiding the waste gas from the engine or steam turbine of the boat **10** does not require any extra resources or increase the cost. Further the waste gas from the engine or steam turbine can also be used to drive a turbo for pumping air or gas toward the gas release outlets **212.** Further using an air flow or the like to make the pressure device **34** requires less power to pump air or gas for generating air bubbles **50** that isolate contact between the high-speed flow of water **F** and the rudder **14** to reduce rudder resistance. Thus, using a small amount of power can achieve multiple times of power. Further, the pressure device **34** can be prepared by using existing resources to directly guide air or gas or to compress air or gas into the gas release outlets **212.**

In conclusion, by means of arranging an air bubble generator **20** in the boat body **11** at a front side relative to the rudder **14** and employing the Bernoulli's principle in hydrodynamics that an increase in the velocity of a stream of fluid results in a decrease in pressure, the invention guides in air or gas to generate air bubbles **50** for isolating contact between the high-speed flow of water **F** and the rudder **14** to reduce rudder resistance.

Although a particular embodiment of the invention has been described in detail for purposes of illustration, various modifications and enhancements may be made without departing from the spirit and scope of the invention. Accordingly, the invention is not to be limited except as by the appended claims.

## Claims

1. A rudder resistance reducing method, comprising the steps of:
a) providing a boat (10) comprising a propeller (13) rotatable to drive said boat (10) to steer and a rudder (14) installed in a boat body (11) at a rear side relative to said propeller (13);
b) installing an air bubble generator (20) in said boat (10), said air bubble generator (20) comprising an air tube (21) defining at least one gas inlet (211) and opposing pairs of gas release outlets (212);
c) providing a gas guide device (30) comprising at least one guide pipe (31), said at least one guide pipe (31) having a bottom end thereof connected to said at least one gas inlet (211) of said air tube (21) and a top end thereof terminating in an intake hole (32);
d) employing rotation of the propeller (13) and steering of the boat body (11) to cause a high-speed flow of water (F), due to Bernoulli's principle, said high-speed flow of water (F) enables pressure in said gas release outlets (212) rapidly decreased to form a negative pressure for sucking in outside air for generating air bubbles (50) during rotation of said propeller (13);
e) employing said negative pressure to suck in outside air which is to be guided by said at least one guide pipe (31) into said at least one gas inlet (211) of said air tube (21) and then discharged out of said gas release outlets (212) to mix with water and to produce multiple air bubbles (50); and
f) utilizing the air bubbles (50) thus produced to isolate a part of the high-speed flow of water (F) and said rudder (14) and to reduce friction contact between the high-speed flow of water (F) and said rudder (14) and to further reduce the resistance of said rudder (14) against the high-speed flow of water (F);
whereby the air bubble generator (20) is at a front side relative to said rudder (14), **characterized by** the fact that the air tube (21) is arranged at the front edge of said rudder (14).

2. The rudder resistance reducing method as claimed in claim 1, wherein the intake hole (32) at the top end of said at least one guide pipe (31) is disposed in the boat (10) or above the water line (12).

3. The rudder resistance reducing method as claimed in claim 2, wherein said gas guide device (30) uses a supplementary measure to guide engine waste gas or low pressure gas from the steam turbine into said at least one guide pipe (31) of said gas guide device (30) for generating air bubbles (50).

4. The rudder resistance reducing method as claimed in claim 3, wherein said gas guide device (30) further compresses a pressure device (34) for pumping a gas into said at least one guide pipe (31) toward said at least one gas release outlet (212), said pressure device (34) being selected from an air compressor, an air blower, an engine, a steam turbine and a turbo of the boat (10).

## Patentansprüche

1. Ein Verfahren zur Verringerung des Ruderwiderstands, umfassend folgende Schritte:
a) Bereitstellen eines Bootes (10) umfassend einen drehbaren Propeller (13) zum Veranlassen eines Steuerns des Bootes (10) und ein in einem Bootsrumpf (11) an einer Rückseite vom Propeller (13) angebrachten Ruder (14);
b) Anbringen eines Luftblasenerzeugers (20) im Boot (10), wobei der Luftblasenerzeuger (20) ein Luftrohr (21) umfasst, das wenigstens einen Gaseintritt (211) und gegenüberliegende Paare von Gasfreisetzungsaustritte (212) definiert;
c) Bereitstellen einer Gasführungsvorrichtung (30) umfassend wenigstens eine Führungsrohrleitung (31), wobei ein unteres Ende der wenigstens einen Führungsrohrleitung (31) mit dem wenigstens einen Gaseintritt (211) des Luftrohrs (21) verbunden ist und ein oberes Ende von dieser in einem Eintrittsloch (32) endet;
d) Verwenden der Drehung des Propellers (13) und der Steuerung des Bootsrumpfes (11) zum Erzeugen eines Wasserstroms mit hoher Geschwindigkeit (F) nach dem Bernoulli-Prinzip, wobei der Wasserstrom mit hoher Geschwindigkeit (F) eine schnelle Abnahme des Drucks in den Gasfreisetzungsaustritten (212) ermöglicht, um einen negativen Druck für das Ansaugen von Außenluft zum Erzeugen von Luftblasen (50) während der Drehung des Propellers (13) aufzubauen;
e) Verwenden des negativen Drucks zum Ansaugen von Außenluft, die durch die wenigstens eine Führungsrohrleitung (31) in den wenigstens einen Gaseintritt (211) des Luftrohrs (21) geführt und anschließend aus den Gasfreisetzungsaustritten (212) ausgestoßen wird, um sich mit Wasser zu vermischen und mehrere Luftblasen (50) zu bilden; und
f) Verwenden der so erzeugten Luftblasen (50) zum Trennen eines Teils des Wasserstroms mit hoher Geschwindigkeit (F) und des Ruders (14) und zum Verringern des Reibungskontakts zwischen dem Wasserstrom mit hoher Geschwindigkeit (F) und dem Ruder (14) und zum weiteren Verringern des Widerstands des Ruders (14) gegen den Wasserstrom mit hoher Geschwindigkeit (F);
wobei sich der Luftblasenerzeuger (20) an der Vorderseite in Beziehung zum Ruder (14) befindet, **dadurch gekennzeichnet, dass** das Luftrohr (21) an der vorderen Kante des Ruders (14) angeordnet ist.

2. Verfahren zur Verringerung des Ruderwiderstands nach Anspruch 1, wobei das Eintrittsloch (32) am oberen Ende der wenigstens einen Führungsrohrleitung (31) im Boot (10) oder oberhalb des Wasserspiegels (12) angeordnet ist.

3. Verfahren zur Verringerung des Ruderwiderstands nach Anspruch 2, wobei die Gasführungsvorrichtung (30) eine zusätzliche Maßnahme zum Führen der Maschinenabgase oder des Niederdruckgases von der Dampfturbine in die wenigstens eine Führungsrohrleitung (31) der Gasführungsvorrichtung (30) zum Erzeugen von Luftblasen (50) verwendet.

4. Verfahren zur Verringerung des Ruderwiderstands nach Anspruch 3, wobei die Gasführungsvorrichtung (30) ferner eine Druckvorrichtung (34) zum Pumpen eines Gases in die wenigstens eine Führungsrohrleitung (31) zum wenigstens einen Gasfreisetzungsaustritt (212) umfasst, wobei die Druckvorrichtung (34) aus einem Luftkompressor, einem Luftgebläse, einer Maschine, einer Dampfturbine und einem Turbolader des Bootes (10) ausgewählt wird.

## Revendications

1. Procédé de réduction de résistance de gouvernail, comprenant les étapes de :
a) disposition d'un bateau (10) comprenant une hélice (13) rotative pour commander la direction dudit bateau (10), et un gouvernail (14) monté dans un corps de bateau (11) sur un côté arrière par rapport à ladite hélice (13) ;
b) installation d'un générateur de bulles d'air (20) dans ledit bateau (10), ledit générateur de bulles d'air (20) comprenant un tube d'air (21) définissant au moins une entrée de gaz (211) et des paires opposées de sorties d'émission de gaz (212) ;
c) disposition d'un dispositif de guidage de gaz (30) comprenant au moins un tuyau de guidage (31), ledit au moins un tuyau de guidage (31) ayant une extrémité inférieure de celui-ci reliée à ladite au moins une entrée de gaz (211) dudit tube d'air (21) et une extrémité supérieure de celui-ci se terminant en un trou d'admission (32) ;
d) utilisation de la rotation de l'hélice (13) et direction du corps de bateau (11) pour provoquer un écoulement d'eau à haute vitesse (F), en raison du principe de Bernoulli ledit écoulement d'eau à haute vitesse (F) permet à une pression dans lesdites sorties d'émission de gaz (212) d'être rapidement diminuée pour former une pression négative pour aspirer de l'air extérieur pour générer des bulles d'air (50) pendant la rotation de ladite hélice (13) ;
e) utilisation de ladite pression négative pour aspirer l'air de extérieur qui doit être guidé par ledit au moins un tuyau de guidage (31) dans ladite au moins une entrée de gaz (211) dudit tube d'air (21), puis déchargé hors desdites sorties d'émission de gaz (212) pour un mélange avec de l'eau et pour produire de multiples bulles d'air (50) ; et
f) utilisation des bulles d'air (20) ainsi produites pour isoler une partie de l'écoulement d'eau à haute vitesse (F) et ledit gouvernail (14) et pour réduire un contact de frottement entre l'écoulement d'eau à haute vitesse (F) et ledit gouvernail (14) et pour réduire encore la résistance dudit gouvernail (14) à l'encontre de l'écoulement d'eau à haute vitesse (F) ;
le générateur de bulles d'air (20) étant sur un côté avant par rapport audit gouvernail (14), **caractérisé par le fait que** le tube d'air (21) est agencé au bord avant dudit gouvernail (14).

2. Procédé de réduction de résistance de gouvernail selon la revendication 1, dans lequel le trou d'admission (32) à l'extrémité supérieure dudit au moins un tuyau de guidage (31) est disposé dans le bateau (10) ou au-dessus de la ligne d'eau (12).

3. Procédé de réduction de résistance de gouvernail selon la revendication 2, dans lequel ledit dispositif de guidage de gaz (30) utilise une mesure supplémentaire pour guider les gaz usés de moteur ou les gaz à basse pression de la turbine à vapeur dans ledit au moins un tuyau de guidage (31) dudit dispositif de guidage de gaz (30) pour générer des bulles d'air (50).

4. Procédé de réduction de résistance de gouvernail selon la revendication 3, dans lequel ledit dispositif de guidage de gaz (30) comprend en outre un dispositif de pression (34) pour pomper un gaz dans ledit au moins un tuyau de guidage (31) vers ladite au moins une sortie d'émission de gaz (212), ledit dispositif de pression (34) étant choisi parmi un compresseur d'air, une soufflante, un moteur, une turbine à vapeur et un turbo du bateau (10).
